Europäisches Patentamt

European Patent Office

Office européen des brevets

(19)

(11) Veröffentlichungsnummer: **0 001 783**
**B1**

(12)

# EUROPÄISCHE PATENTSCHRIFT

(45) Veröffentlichungstag der Patentschrift:
18.02.81

(21) Anmeldenummer: 78101163.0

(22) Anmeldetag: 16.10.78

(51) Int. Cl.³: **H 04 Q 3/00**, H 04 H 7/00,
H 04 H 1/02, H 04 N 5/22,
H 01 R 21/22

(54) **Koppelfeld in einem Vermittlungssystem.**

(30) Priorität: 09.11.77 DE 7734314 U

(43) Veröffentlichungstag der Anmeldung:
16.05.79 Patentblatt 79/10

(45) Bekanntmachung des Hinweises auf die Patenterteilung:
18.02.81 Patentblatt 81/7

(84) Benannte Vertragsstaaten:
BE CH DE FR GB LU NL SE

(56) Entgegenhaltungen:
DE-A-2 238 030
US-A-4 023 141

INTERNATIONAL BROADCAST ENGINEER
Vol. 6, Nr. 122, März 1975,
Eton, Berks, GB,
W.H. JONES "The pye TVT approach to audio controlsystems", Seiten 4–6, 8–11
JOURNAL OF THE SMPTE, Vol. 75, Nr. 1
9. September 1966,
Scarsdale
G. FARNWORTH " A new studio vision mixer", Seiten
942–950
SYSTEMS TECHNOLOGY, Nr. 21, Juni 1975,
Liverpool GB,
G.H. KING "A new house telephone exchange system",
Seiten 2–8

(73) Patentinhaber: **GRUNDIG E.M.V. Elektro-Mechanische
Versuchsanstalt Max Grundig, Kurgartenstrasse 37,
D-8510 Fürth (DE)**

(72) Erfinder: **Bönisch, Werner, Ronhofer Weg 39,
D-8510 Fürth (DE)**
Erfinder: **Berk, Gerhardt, Sandäcker Strasse 10,
D-8502 Zirndorf (DE)**

(74) Vertreter: **Voigt, Günter, Kurgartenstrasse 37,
D-8510 Fürth (DE)**

Koppelfeld in einem Vermittlungssystem

Die Erfindung bezieht sich auf ein Koppelfeld gemäss Oberbegriff des Anspruchs 1.

In Vermittlungssystemen verschiedenster Art, beispielsweise Video- und Telefonvermittlungssystemen, sind Koppelfelder erforderlich, die eine wahlweise Verbindung von Signalquellen und Signalsenken ermöglichen. Bei einstufigen Koppelfeldern für a Signalquellen und b Signalsenken sind a · b Koppelpunkte erforderlich, um alle möglichen Signalwege durchschalten zu können. Üblich ist eine Zuordnung der Koppelpunkte zu Reihen und Spalten einer Matrix. Dabei werden im allgemeinen alle Sammelleitungen von Reihen als Signalquellen und alle Sammelleitungen von Spalten als Signalsenken bzw. umgekehrt behandelt. Ein solches Koppelfeld ist in seiner Auslegung starr. Eine Anpassung an die jeweils geforderte Konfiguration ist nur möglich, wenn das Koppelfeld grösser als zunächst erforderlich ausgelegt worden ist. Dabei wird dann selbstverständlich nur ein mehr oder weniger grosser Teil des verfügbaren Koppelfeldes tatsächlich benutzt. Der ungenutzte Teil ist überflüssig und wird nicht bestückt. Die vorsorglich zu grosse Dimensionierung der Koppelfelder verursacht zusätzliche Kosten. Auf den jeweiligen Einzelfall zugeschnittene Sonderanfertigungen sind jedoch wegen der hohen Kosten ebenfalls nicht vertretbar.

Aus der US-A-4 023 141 ist bereits ein Koppelfeld bekannt, das die Form eines rechtwinkligen Trapezes hat, bei dem zur Kontaktvermittlung von c Teilnehmern (c–1) Koppelpunkte an der Grundseite und c/2 Koppelpunkte an der zur Grundseite parallelen Seite und an der zu diesen Seiten senkrechten Seite vorhanden sind. Bei einer solchen Anordnung muss jedoch von Anfang an bekannt sein, wieviele Signalquellen mit wievielen Signalsenken zu verbinden sind. Eine flexible Anpassung an die jeweiligen Anforderungen ist nicht möglich. Ändert sich die Verteilung zwischen Signalquellen und Signalsenken, so muss das Koppelfeld ausgetauscht werden.

Aus der Zeitschrift «International Broadcast Engineer», Vol. 6, Nr. 122, März 1975, Seite 10, linke Spalte, letzter Absatz ist es zwar bereits bekannt, die Koppelelemente steckbar auszubilden, eine Lösung der oben geschilderten Problematik ist damit jedoch nicht erreichbar.

Der Erfindung liegt die Aufgabe zugrunde, ein an den Teilnehmerbedürfnissen orientierbares Koppelfeld zu schaffen, das trotz grosser Anpassungsfähigkeit bei geringen Kosten ein Minimum an Platz erfordert.

Die Lösung dieser Aufgabe erfolgt erfindungsgemäss durch die im kennzeichnenden Teil des Anspruchs 1 angegebenen Massnahmen.

Vorteilhafte Weiterbildungen ergeben sich aus den Unteransprüchen.

Die Erfindung wird nachfolgend unter Bezugnahme auf die Zeichnungsfiguren beispielsweise erläutert. Es zeigen:

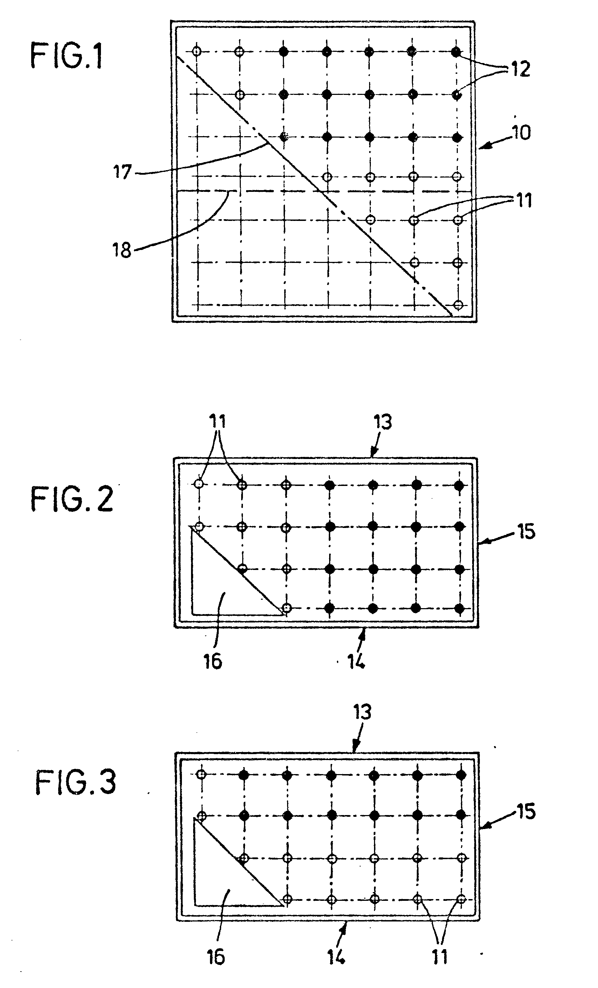

Fig. 1 bis 3 verschiedene an sich bekannte Koppelfelder für acht Teilnehmer.

Das in Fig. 1 dargestellte bekannte Koppelfeld mit einer Grundplatte 10 ist zur wahlweisen Verbindung zwischen acht Teilnehmern geeignet. Sowohl in der Senkrechten als auch in der Waagerechten sind sieben Koppelpunkte 11 nebeneinander möglich. Damit ist die Möglichkeit gegeben, bei acht Teilnehmern im Extremfall eine Signalquelle, die beispielsweise mit einer waagerechten Sammelleitung verbunden ist, mit sieben Signalsenken, die beispielsweise mit den senkrecht gezeichneten Sammelleitungen verbunden sind, wahlweise zu verbinden. Sind jedoch von den acht Teilnehmern drei Signalquellen und fünf Signalsenken, so werden beispielsweise die drei Signalquellen mit drei waagerecht eingezeichneten Sammelleitungen und die fünf Signalsenken mit den senkrecht eingezeichneten Sammelleitungen verbunden. In einem solchen Fall werden lediglich die fünfzehn durch vollausgezogene Punkte gekennzeichneten Koppelpunkte 12 benötigt. Wie ohne weiteres erkennbar ist, ist auch in einem solchen Fall die Grundplatte 10 des Koppelfeldes an sich zu gross dimensioniert. Eine Verkleinerung der Grundplatte 10 war bisher jedoch nur bei Verringerung der Flexibilität möglich. Unter Berücksichigung auch der Möglichkeit einer Verteilung von Signalquellen zu Signalsenken im Verhältnis 7:1 bzw. 1:7 erschien die in Fig. 1 dargestellte Grösse des Koppelfeldes, bei der sieben Koppelstellen in der Waagerechten nebeneinander und sieben Koppelstellen in der Senkrechten untereinander vorgesehen waren, als unbedingt erforderlich. Lediglich der links der strichpunktierten Linie 17 in Fig. 1 liegende Teil des Koppelfeldes erschien entbehrlich. Wenn je nach Teilnehmerverteilung die Signalquellen oder aber die Signalsenken mit den waagerecht eingezeichneten Sammelleitungen bzw. mit den senkrecht eingezeichneten Sammelleitungen verbunden werden, kann darüber hinaus aber auch auf den unterhalb der gestrichelten Linie 18 liegenden Teil des Koppelfeldes gemäss Fig. 1 verzichtet werden.

In Erkenntnis dieses Sachverhaltes wurde das in Fig. 2 dargestellte, ebenfalls bereits bekannte verkleinerte Koppelfeld mit einer Grundplatte 10 gemäss Fig. 2 geschaffen. Eine solche Grundplatte 10 ermöglicht bei acht zu verbindenden Teilnehmern Zuordnungen von Signalquellen zu Signalsenken im Verhältnis 7:1, 6:2, 5:3 und 4:4, wenn die Signalquellen jeweils mit den waagerecht gezeichneten Sammelleitungen in Verbindung stehen. Eine Realisierung der Verhältnisse 3:5, 2:6 und 1:7 ist dadurch möglich, dass die dann in der Überzahl befindlichen Signalsenken mit den senkrecht eingezeichneten Sammelleitungen in Verbindung gebracht werden. Das an sich bekannte Koppelfeld gemäss Fig. 2 sowie das ebenfalls an sich bereits bekannte Koppelfeld gemäss Fig. 3 zeigen die Bestückung eines Koppelfeldes mit Koppelelementen bei einer Verteilung von 4:4 bzw. 2:6.

Grundsätzlich kann gesagt werden, dass es ausreichend ist, wenn die Grundplatte bei c wahlweise zu verbindenden Teilnehmern $(c-1) \cdot \frac{c}{2}$ potentielle Knotenpunkte aufweist, wobei in der einen Hauptrichtung des Koppelfeldes $(c-1)$ Koppelstellen 11, 12 nebeneinander und in der zweiten Hauptrichtung des Koppelfeldes $c/_2$ Koppelstellen 11, 12 nebeneinander vorhanden sind.

Von der Möglichkeit, entweder die waagerecht eingezeichneten Sammelleitungen oder aber die senkrecht eingezeichneten Sammelleitungen als Signalquellen bzw. -senken zu verwenden, kann in einfacher Weise dadurch Gebrauch gemacht werden, dass unidirektionale Koppelelemente verwendet werden, die auf einer an den Koppelstellen vorgesehenen Steckleiste sowohl in einer ersten als auch in einer zweiten, zur ersten um 180° gedrehten Stellung gesteckt werden können.

Die Ansteuerung der Koppelelemente erfolgt am einfachsten durch die Einführung von x-y-Steuerleitungen, für die dann selbstverständlich entsprechende Kontakte an den Steckleisten vorgesehen sein müssen. Das jeweils anzusteuernde Koppelelement wird bei der Ansteuerung dadurch definiert, dass es im Schnittpunkt der beiden angesteuerten Leitungen, nämlich einer x-Leitung und einer y-Leitung liegt. In jedem Koppelelement bzw. in jedem Koppelpunkt ist dabei ein bistabiles Element vorgesehen. Es besteht jedoch dann noch keine Sicherheit dagegen, dass mehrere Quellen auf die gleiche Senke geschaltet werden und sich dadurch gegenseitig stören. Die Ansteuerung sollte daher im oben geschilderten Fall vorzugsweise durch Prozessoren erfolgen, die durch entsprechende Programmierung solche unerwünschten Schaltmöglichkeiten ausschliessen.

Die x- bzw. y-Steuerleitungen können durch einen Decoder 1 aus n adressiert werden. Besteht das gesamte Koppelfeld aus mehreren einzelnen Koppelfeldplatten, müssen die Adressen für jede Platte so modifiziert werden, dass der richtige Koppelpunkt angesprochen wird. Das ist beispielsweise dadurch möglich, dass allen Platten die Adresse über einen Bus zugeführt wird und auf jeder Platte von diesem Adresswort ein konstanter, beispielsweise durch Löt- und/oder Steckbrücken programmierbarer Wert, so subtrahiert wird, dass sich für das erste Koppelelement auf dieser Platte die Ansteuerkombination x = 0 und y = 0 ergibt. Dadurch ist eine einwandfreie Ansteuerung des Koppelfeldes gewährleistet, ohne dass die tatsächliche Zusammensetzung des aus einzelnen Koppelfeldplatten bestehenden Koppelfeldes bekannt sein muss. Die Sammelleitungen können bei den vorhandenen Koppelfeldplatten durchgeschleift werden. Erforderliche Trennverstärker können so ausgeführt werden, dass sie je nach Steckrichtung sowohl als Eingangs- als auch als Ausgangstrennverstärker eingesetzt werden können.

Die Vorteile des beschriebenen Koppelfeldes liegen in der Möglichkeit, sich allen geforderten Koppelfeldkonfigurationen optimal anpassen zu können. Die Steckbarkeit der Koppelelemente ermöglicht die Bestückung mit Elementen unterschiedlicher Eigenschaften auf der gleichen Koppelfeldplatte, beispielsweise die Verwendung von speziellen Koppelelementen für Audio-, Video- und Telefonvermittlung, und dies sogar bei unterschiedlichen Qualitätsanforderungen. Die programmierbare Decodierung ermöglicht gleichartige Ansteuerbedingungen verschiedenster Koppelfelder.

Die Koppelelemente werden als steckbare spiegelsymmetrische unidirektionale Elemente aufgebaut, die auf der Grundplatte je nach Bedarf aufgesteckt werden können. Die Übertragungsrichtung eines solchen Elementes kann dann durch um 180° gedrehtes Stecken umgekehrt werden. Die Richtung der gesteckten Koppelelemente bestimmt, ob eine Sammelleitung als Nachrichtenquelle oder Nachrichtensenke benutzt wird.

## Patentansprüche

1. Koppelfeld in einem Vermittlungssystem, beispielsweise in einem Video- oder Telefonvermittlungssystem, das auf einer Grundplatte (10) mit einer aus Reihen und Spalten bestehenden Matrix aufgebaut ist und die Form eines rechtwinkligen Trapezes hat, bei dem die Grundseite (13) zur Kontaktvermittlung von c Teilnehmern eine Länge von $(c-1)$ Koppelpunkten (11, 12) und die zur Grundseite parallele Seite (14) sowie die senkrecht zu diesen Seiten verlaufende Seite (15) eine Länge von c/2 Koppelpunkten aufweist, dadurch gekennzeichnet, dass auf der Grundplatte (10) in den Koppelpunkten (11, 12) zur Aufnahme steckbarer unidirektionaler Koppelelemente Steckleisten vorhanden sind, die um jeweils 180° gegeneinander verdrehte Steckpositionen der Koppelelemente ermöglichen.

2. Koppelfeld nach Anspruch 1, dadurch gekennzeichnet, dass in dem das rechtwinklige Trapez zu einem Rechteck ergänzenden, an sich freibleibenden Dreieck (16) zusätzliche Elemente des Koppelfeldes, wie Programmiereinheiten, Verstärker u.ä., angeordnet sind.

3. Koppelfeld nach einem der Ansprüche 1 oder 2, dadurch gekennzeichnet, dass die Steckleisten neben Kontakten für die Video- und Telefonübertragung zusätzliche Kontakte für die Ansteuerung und Spannungsversorgung der Koppelelemente aufweisen.

## Claims

1. A coupling field in an exchange system, for example in a video or telephone exchange system, which is assembled on a base plate (10) comprising a matrix consisting of rows and columns and has the shape of a rectangular trapezium, in which the base side (13) for the contact exchange of c subscribers has a length of $(c-1)$ coupling points (11, 12) and the side (14) parallel to the base side and the side (15) extending perpendicularly to the parallel side has a length of $c/_2$ coupling points, characterised in that, jack strips are provided on the base plate (10) at the coupling points (11, 12) for the reception of plug-in uni-directional coupling elements, which jack strips permit plug-in portions of the coupling elements rotated through 180° with respect to each other.

2. A coupling field according to claim 1, characterised in that, additional elements of the coupling field, such as programme units, amplifiers and the like, are arranged in the triangle (16), itself remaining independent, restoring the rectangular trapezium to a rectangle.

3. A coupling field according to claims 1 or 2, characterised in that, in addition to contacts for video and telephone transmission, the jack strips have additional contacts for the control and voltage supply of the coupling elements.

**Revendications**

1. Réseau de couplage inclus dans un système de communication, par exemple dans un système de communication vidéo ou téléphonique du type construit sur une plaque de base (10) avec une matrice composée de rangées et de colonnes et possédant la forme d'un trapèze rectangle dans lequel, pour l'établissement de communications par contact entre c correspondants, le côté de base (13) possède une longueur de (c-1) points de couplage (11, 12) et le côté (14) parallèle à cette base ainsi que le côté (15) perpendiculaire à ces cotés possèdent une longueur de (c/2) points de couplage, ce réseau de couplage étant caractérisé en ce que sur la plaque de base (10), au points de couplage (11, 12) sont prévues, pour la réception d'éléments de couplage unidirectionnels, embrochables, des réglettes de connexions embrochables, qui permettent de donner aux éléments de couplage des positions d'embrochages retournées de 180° l'une par rapport à l'autre.

2. Réseau de couplage suivant la revendication 1, caractérisé en ce que dans le triangle (16) qui reste en soi libre et qui complète le trapèze rectangle pour former un rectangle, sont agencés des éléments supplémentaires du réseau de couplage tels que des unités de programmation, des amplificateurs et autres.

3. Réseau de couplage suivant l'une des revendications 1 et 2, caractérisé en ce que les réglettes de connexions embrochables portent, en dehors de contacts pour la transmission vidéo et téléphonique, des contacts supplémentaires pour l'excitation et l'alimentation en tension des éléments de couplage.

FIG.1

FIG.2

FIG.3